# EUROPÄISCHE PATENTSCHRIFT

(11) **EP 4 499 458 B1**
(45) Veröffentlichungstag und Bekanntmachung des Hinweises auf die Patenterteilung: **29.07.2026**
(21) Anmeldenummer: 23716786.1
(22) Anmeldetag: 29.03.2023
(51) Int. Cl.: B60R 21/203, B60R 21/2346

(54) **GASSACK FÜR EIN FAHRZEUGINSASSEN-RÜCKHALTESYSTEM, VERFAHREN ZU DESSEN HERSTELLUNG SOWIE GASSACKMODUL UND FAHRZEUGLENKRAD MIT EINEM SOLCHEN GASSACK**
AIRBAG FOR A VEHICLE OCCUPANT RESTRAINT SYSTEM, METHOD FOR THE PRODUCTION THEREOF, AND AIRBAG MODULE AND VEHICLE STEERING WHEEL COMPRISING SUCH AN AIRBAG
COUSSIN GONFLABLE POUR UN SYSTÈME DE RETENUE DES OCCUPANTS D'UN VÉHICULE, PROCÉDÉ POUR SA FABRICATION AINSI QUE MODULE DE COUSSIN GONFLABLE ET VOLANT DE DIRECTION DE VÉHICULE AVEC UN TEL COUSSIN GONFLABLE

(30) Priorität: 30.03.2022 DE 102022107566
(43) Veröffentlichungstag der Anmeldung: 05.02.2025
(73) Patentinhaber: Dalphi Metal Espana, SLU, 36213 Vigo (ES); Safe Life Industria de Componentes de Seguranca Automovel Lda, 4990-645 Gemieira (PT); ZF Automotive Safety Germany GmbH, 63743 Aschaffenburg (DE)
(72) Erfinder: PIRES SOUSA, Cátia Celeste, 4960-256 Paderne, Melgaço (PT); AMORIM CORREIA, João Duarte, 4990-601 Viana do Castelo (PT); FRANCO, Bartolomeu, 4900-427 Viana do Castelo (PT); BOULLOSA, Javier, 36206 Vigo (ES); JONIETZ, Andreas Joachim Maria, 36204 Vigo (ES)
(74) Vertreter: ZF LIFETEC Intellectual Property
(86) Internationale Anmeldenummer: PCT/EP2023/058149
(87) Internationale Veröffentlichungsnummer: WO 2023/186986

(56) Entgegenhaltungen:
- US-A- 5 573 270
- US-A1- 2005 116 455
- US-B1- 6 382 662

## Beschreibung

Die Erfindung betrifft einen Gassack für ein Fahrzeuginsassen-Rückhaltesystem, ein Verfahren zu dessen Herstellung sowie ein Gassackmodul und ein Fahrzeuglenkrad mit einem solchen Gassack.

Gassäcke kommen als Bestandteil von Gassackmodulen etwa im Nabenbereich von Fahrzeuglenkrädern zum Einsatz und werden bei einem Fahrzeugcrash mittels eines Gasgenerators rasch aufgeblasen, um einen Insassenaufprall zu dämpfen und den Fahrzeuginsassen vor schweren Verletzungen zu schützen.

Gewöhnlich werden Gassäcke über eine auch als Gassackmund bezeichnete Öffnung befüllt und am Öffnungsrand mit einem Modulgehäuse verbunden sowie über das Modulgehäuse an einem Modulträger montiert, beispielsweise an einem Lenkradgrundkörper. Aufgrund der raschen Befüllung und Entfaltung des Gassacks treten am Öffnungsrand hohe Zugkräfte auf, die zu einem Aufreißen des Gassacks sowie zu unerwünschten Gasleckagen führen können. Um dies zu vermeiden, sind aus dem Stand der Technik bereits Verstärkungslagen bekannt, die am Rand des Gassackmunds angeordnet werden. Häufig sind zwei oder mehr Verstärkungslagen vorgesehen, welche nach einer Aktivierung des Gassackmoduls eine sichere und zuverlässige Befestigung des Gassacks am Modulgehäuse gewährleisten.

Ferner sind zum Beispiel aus EP 0 930 201 B1 oder der US 5,573,270 A bereits flexible Diffusorelemente bekannt, mit denen ein Entfaltungsvorgang des Gassacks in gewünschter Weise gesteuert und/oder der Gassack zu Beginn seiner Entfaltung vor Beschädigungen durch heißes Generatorgas geschützt werden kann.

Die im Stand der Technik vorgeschlagenen Verstärkungslagen und flexiblen Diffusorelemente tragen allerdings zu einem hohen Fertigungsaufwand für den Gassack bei, was zu einer unerwünscht zeit- und kostenintensiven Gassackproduktion führt.

Die US 2005/0116455 A1 zeigt einen Gassack für ein Fahrzeuginsassen-Rückhaltesystem mit den Merkmalen im Oberbegriff des Anspruchs 1, wobei ein flexibler Diffusor mit mehreren Verbindungsarmen vorgesehen ist, wobei die Enden der Verbindungsarme jeweils einen Gassackmund des Gassacks umschließen.

Aufgabe der Erfindung ist die Bereitstellung eines konstruktiv besonders einfach aufgebauten Gassacks, der sich dennoch sicher und zuverlässig befestigen lässt sowie eine gewünschte Steuerung des Entfaltungsvorgangs ermöglicht.

Erfindungsgemäß wird diese Aufgabe gelöst durch einen Gassack für ein Fahrzeuginsassen-Rückhaltesystem, mit einer Gassackrückwand, die einen Gassackmund zum Aufblasen des Gassacks sowie mehrere um den Gassackmund verteilte Rückwandöffnungen zur Aufnahme von Befestigungsbolzen aufweist, und einem flexiblen Diffusor, der einen zentralen Abdeckabschnitt aufweist, sowie mehrere Verbindungsarme, die sich jeweils vom zentralen Abdeckabschnitt zu einem freien Ende erstrecken, wobei die freien Enden der Verbindungsarme Diffusorbefestigungsöffnungen zur Aufnahme von Befestigungsbolzen aufweisen, wobei die freien Enden der Verbindungsarme auf einer Innenseite der Gassackrückwand so angeordnet sind, dass die Diffusorbefestigungsöffnungen mit den Rückwandöffnungen fluchten und auf jeder Rückwandöffnung jeweils zwei Diffusorbefestigungsöffnungen von unterschiedlichen, überlappenden Verbindungsarmen zu liegen kommen, und wobei die im Bereich einer Rückwandöffnung überlappenden Verbindungsarme fest miteinander sowie fest mit der Gassackrückwand verbunden sind. Der Diffusor übernimmt in diesem Fall auch eine Verstärkungsfunktion bei der Anbindung des Gassacks im Bereich des Gassackmunds. Separate Verstärkungslagen können vollständig entfallen oder zumindest hinsichtlich ihrer Anzahl verringert werden, wodurch sich die Anzahl der Gassackkomponenten und damit auch der Fertigungsaufwand für den Gassack verringert.

Erfindungsgemäß sind alle Verbindungsarme des Diffusors und die Gassackrückwand durch eine einzige Naht verbunden, wobei die Naht den Gassackmund vollständig umschließt.

Diese Naht kann hierbei zusätzlich eine der Rückwandöffnungen, insbesondere jede der Rückwandöffnungen, einzeln umschließen. Alle Verbindungsarme und die Gassackrückwand durch nur eine einzige Naht zu verbinden, trägt ebenfalls zu einem besonders geringen Fertigungsaufwand für den Gassack bei. Durch das Umschließen einzelner, insbesondere aller Rückwandöffnungen wird nach einer Aktivierung des Fahrzeuginsassen-Rückhaltesystems ein Ausreißen der Rückwandöffnungen erschwert, sodass sich eine äußerst robuste Gassackkonstruktion ergibt.

Gemäß einer besonders bevorzugten Ausführungsform des Gassacks ist der flexible Diffusor einstückig ausgebildet, insbesondere wobei der Diffusor aus einem einstückigen Gewebelappen besteht. Neben seiner Aufgabe zur Gaslenkung erfüllt der Diffusor hier zusätzlich die Funktion von (wenigstens) zwei Verstärkungslagen, wodurch die Anzahl der Einzelkomponenten des Gassacks in vorteilhafter Weise minimiert wird.

Der zentrale Abdeckabschnitt des Diffusors kann (bevorzugt randseitig) eine definierte Schwächungszone aufweisen, an welcher der zentrale Abdeckabschnitt bei Erreichen einer vorgegebenen Materialbeanspruchung aufreißt. Auf diese Weise lässt sich mit geringem Aufwand eine weitere Abströmöffnung realisieren, welche bei Erreichen der vorgegebenen Materialbeanspruchung im Diffusor entsteht und die weitere Entfaltung des Gassacks verändert.

Die Erfindung umfasst im Übrigen ein Gassackmodul mit einem Gasgenerator, einem Gassackhalteelement, einem Modulboden sowie einem oben beschriebenen Gassack, wobei Befestigungsbolzen vorgesehen sind, welche sich jeweils durch die fluchtenden Rückwand- und Diffusorbefestigungsöffnungen erstrecken sowie zumindest das Gassackhalteelement und den Gassack am Modulboden fixieren. Bevorzugt ist der Gasgenerator ebenfalls durch die Befestigungsbolzen am Modulboden fixiert, zum Beispiel durch Klemmung. Außerdem sind Ausführungsvarianten denkbar, bei denen das Gassackhalteelement in den Gasgenerator integriert, das heißt also einstückig mit dem Gasgenerator ausgebildet ist.

Ferner umfasst die Erfindung auch ein Fahrzeuglenkrad mit einem Lenkradgrundkörper und einem zuvor beschriebenen Gassackmodul, wobei das Gassackmodul am Lenkradgrundkörper befestigt ist, insbesondere mittels einer Rastverbindung.

Bei einem solchen Fahrzeuglenkrad kann der Diffusor genau drei Verbindungsarme aufweisen, wobei sich zwischen den Verbindungsarmen genau drei Abströmöffnungen ergeben. Über die Geometrie der Verbindungsarme sowie die Ausrichtung und Größe der Abströmöffnungen lässt sich die Gassackentfaltung gezielt beeinflussen und mit geringem Aufwand eine gewünschte Entfaltungscharakteristik einstellen.

Vorzugsweise ist hierbei in einer Neutralstellung des Fahrzeuglenkrads für Geradeausfahrt eine der Abströmöffnungen im 6-Uhr-Bereich angeordnet. In diesem unteren Lenkradbereich ist ein Abstand zum Fahrzeuginsassen gering, sodass eine rasche und gezielte Gassackentfaltung im 6-Uhr-Bereich mit Blick auf die Insassensicherheit vorteilhaft erscheint.

Schließlich umfasst die Erfindung noch ein Verfahren zum Herstellen eines oben beschriebenen Gassacks mit den folgenden Verfahrensschritten:
a) Bereitstellen einer Gassackrückwand mit einem Gassackmund zum Aufblasen des Gassacks (20), mehreren Rückwandöffnungen und einem flexiblen Diffusor mit mehreren Verbindungsarmen, welche an ihren freien Enden Diffusorbefestigungsöffnungen aufweisen;
b) Ausrichten der Gassackrückwand und der Verbindungsarme, sodass eine Rückwandöffnung mit wenigstens zwei Diffusorbefestigungsöffnungen benachbarter Verbindungsarme fluchtet;
c) Verbinden der Gassackrückwand mit den Verbindungsarmen des Diffusors durch eine Naht, die den Gassackmund vollständig umschließt;
d) Bereitstellen einer Gassackfrontwand und Verbinden dieser Gassackfrontwand mit der Gassackrückwand, insbesondere durch eine randseitig umlaufende Umfangsnaht;
Die Gassackrückwand wird bei diesem Verfahren schnell und einfach mit einem flexiblen Diffusor verbunden und durch die Diffusoranbindung gleichzeitig im Bereich des Gassackmunds verstärkt. Zusätzliche separate Verstärkungslagen im Bereich des Gassackmunds können daher in ihrer Anzahl zumindest reduziert werden oder sogar vollständig entfallen, wodurch sich eine besonders schnelle und einfache Gassackfertigung ergibt.

Optional kann zwischen Schritt c) und Schritt d) ein randseitiger Abschnitt eines Verbindungsarms mit einem randseitigen Abschnitt des zentralen Abdeckabschnitts verbunden, insbesondere durch eine Naht vernäht werden. Auf diese Weise lässt sich die Anzahl und/oder die Größe der Abströmöffnungen des Diffusors verringern.

Gemäß einer Verfahrensvariante ist der flexible Diffusor einstückig ausgebildet und weist wenigstens zwei Verbindungsarme auf, wobei im Schritt c) alle Verbindungsarme mit der Gassackrückwand verbunden werden.

In einer alternativen Verfahrensvariante ist ein Verbindungsarm des flexiblen Diffusors zweiteilig ausgebildet, sodass der Diffusor einen Diffusorabschnitt mit wenigstens einem Verbindungsarm und einem Armansatz sowie einen separaten Armabschnitt mit Diffusorbefestigungsöffnungen aufweist, wobei im Schritt c) sowohl alle Verbindungsarme des Diffusorabschnitts als auch der separate Armabschnitt mit der Gassackrückwand verbunden werden.

Der Armansatz und der separate Armabschnitt werden in dieser Verfahrensvariante bevorzugt nach Schritt d) durch den Gassackmund nach außen gezogen und miteinander verbunden, insbesondere mittels einer Diffusornaht.

Alternativ können der Armansatz und der separate Armabschnitt in dieser Verfahrensvariante auch vor Schritt d) miteinander verbunden werden, insbesondere mittels einer Diffusornaht.

Weitere Merkmale und Vorteile der Erfindung ergeben sich aus den Unteransprüchen sowie aus der nachfolgenden Beschreibung bevorzugter Ausführungsformen unter Bezugnahme auf die Zeichnungen. In diesen zeigt:
- Figur 1 eine schematische Explosionsansicht eines Fahrzeuglenkrads mit einem Gassackmodul und einem Gassack gemäß der Erfindung;
- Figur 2 eine schematische Teilansicht des erfindungsgemäßen Gassackmoduls aus Figur 1 im Bereich des Diffusors;
- Figur 3 eine schematische Ansicht des erfindungsgemäßen Fahrzeuglenkrads aus Figur 1 im zusammengebauten Zustand während der Gassackentfaltung;
- Figuren 4-7 schematische Skizzen zur Herstellung eines erfindungsgemäßen Gassacks mit einem Diffusor gemäß einer ersten Ausführungsform;
- Figuren 8-11 schematische Skizzen zur Herstellung eines erfindungsgemäßen Gassacks mit einem Diffusor gemäß einer zweiten Ausführungsform;
- Figuren 12-15 schematische Skizzen zur Herstellung eines erfindungsgemäßen Gassacks mit einem Diffusor gemäß einer dritten Ausführungsform; und
- Figuren 16-21 schematische Skizzen zur Herstellung eines erfindungsgemäßen Gassacks mit einem Diffusor gemäß einer vierten Ausführungsform.

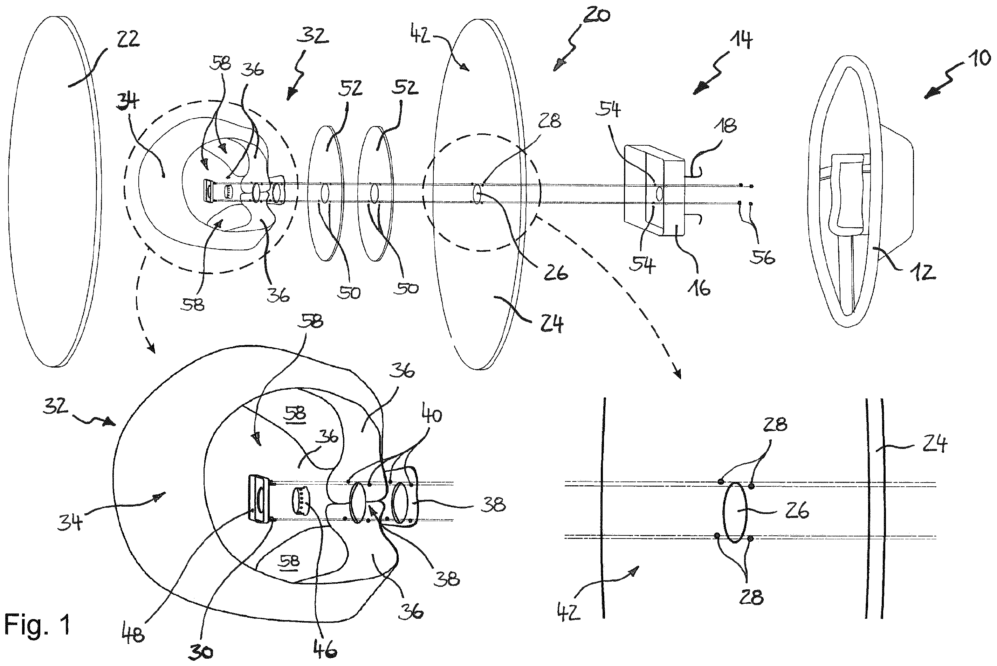

Die Figur 1 zeigt eine schematische Explosionsansicht eines Fahrzeuglenkrads 10 mit einem Lenkradgrundkörper 12 und einem Gassackmodul 14, welches sich am Lenkradgrundkörper 12 befestigen lässt. Im dargestellten Ausführungsbeispiel sind hierzu an einem Modulboden 16 des Gassackmoduls 14 Rasthaken 18 angedeutet, die bei der Modulmontage mit einem am Lenkradgrundkörper 12 angebrachten Federelement (nicht dargestellt) verrasten, wobei die Rasthaken 18 alternativ natürlich auch am Lenkradgrundkörper 12 und das Federelement entsprechend am Modulboden 16 vorgesehen sein können.

Ein Gassack 20 des Gassackmoduls 14 umfasst gemäß Figur 1 eine Gassackfrontwand 22, die im aufgeblasenen Zustand des Gassacks 20 einem Fahrzeuginsassen 23 zugewandt ist, eine gegenüberliegende Gassackrückwand 24, die einen Gassackmund 26 zum Aufblasen des Gassacks 20 sowie mehrere um den Gassackmund 26 verteilte Rückwandöffnungen 28 zur Aufnahme von Befestigungsbolzen 30 aufweist, und einen flexiblen Diffusor 32, der einen zentralen Abdeckabschnitt 34 aufweist, sowie mehrere Verbindungsarme 36, die sich jeweils vom zentralen Abdeckabschnitt 34 zu einem freien Ende 38 erstrecken, wobei die freien Enden 38 der Verbindungsarme 36 Diffusorbefestigungsöffnungen 40 zur Aufnahme von Befestigungsbolzen 30 aufweisen.

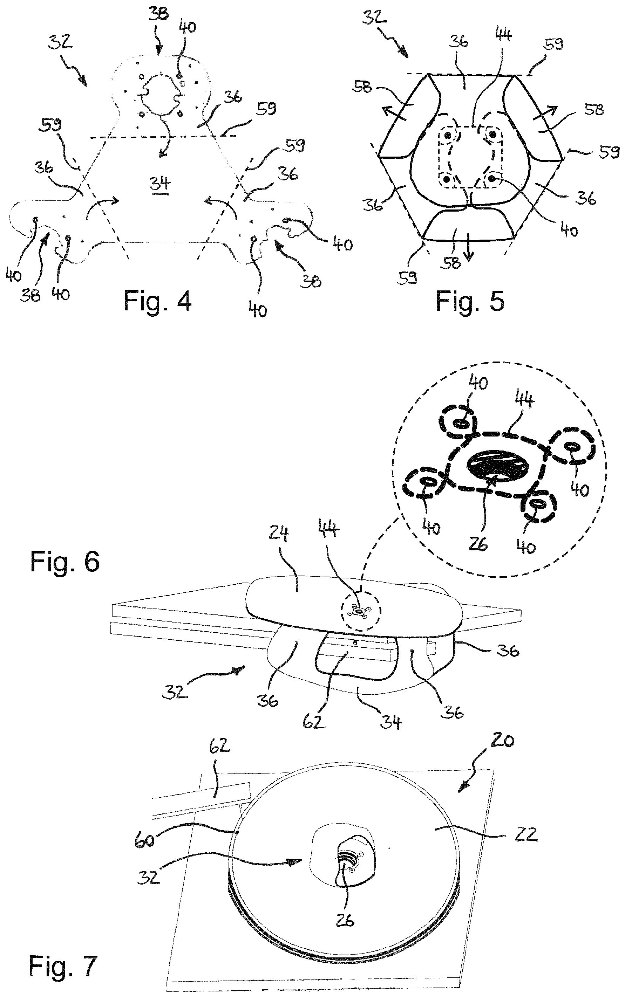

Die freien Enden 38 der Verbindungsarme 36 sind auf einer Innenseite 42 der Gassackrückwand 24 so angeordnet, dass die Diffusorbefestigungsöffnungen 40 mit den Rückwandöffnungen 28 fluchten und auf jeder Rückwandöffnung 28 jeweils zwei Diffusorbefestigungsöffnungen 40 von unterschiedlichen, überlappenden Verbindungsarmen 36 zu liegen kommen (siehe Figur 1, Vergrößerungsausschnitte), wobei die im Bereich einer Rückwandöffnung 28 überlappenden Verbindungsarme 36 fest miteinander sowie fest mit der Gassackrückwand 24 verbunden sind, insbesondere durch eine Naht 44 (siehe Figur 6).

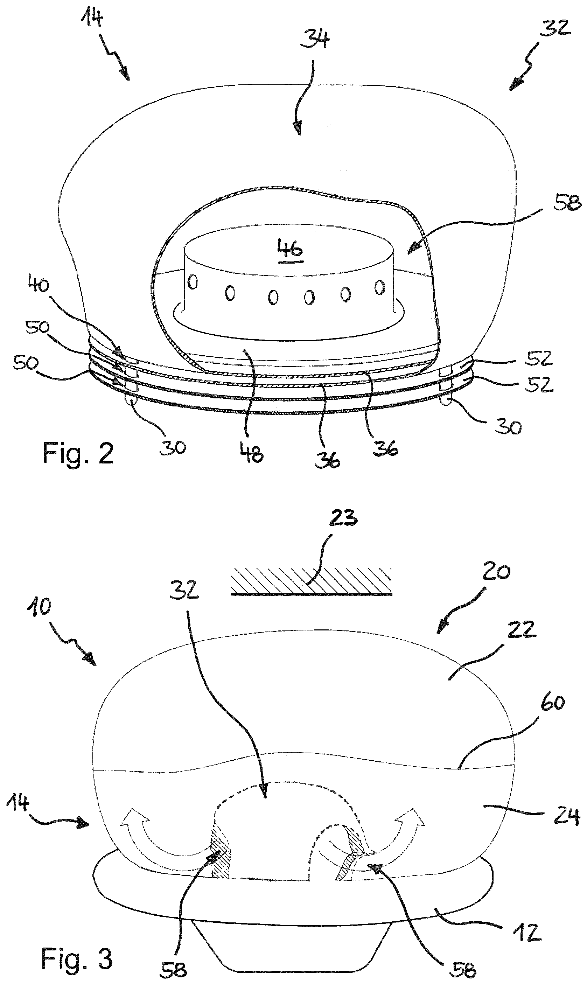

Neben dem Gassack 20 weist das Gassackmodul 14 einen Gasgenerator 46, ein Gassackhalteelement 48 sowie den Modulboden 16 auf, wobei ferner Befestigungsbolzen 30 vorgesehen sind, welche in den Figuren 1 und 2 angedeutet und im dargestellten Ausführungsbeispiel starr am Gassackhalteelement 48 angebracht sind. Ausgehend vom Gassackhalteelement 48 erstrecken sich die Befestigungsbolzen 30 hierbei zunächst durch jeweils zwei Diffusorbefestigungsöffnungen 40, gegebenenfalls durch Öffnungen 50 optional vorgesehener Verstärkungslagen 52, dann durch Rückwandöffnungen 28 der Gassackrückwand 24 und Bodenöffnungen 54 des Modulbodens 16, bevor schließlich Bolzenmuttern 56 aufgedreht werden. Somit sind durch die Bolzen 30 zumindest das Gassackhalteelement 48 und der Gassack 20 (inklusive Diffusor 32) am Modulboden 16 fixiert.

Im dargestellten Ausführungsbeispiel ist ein Flansch des Gasgenerators 46 zwischen dem Gassackhalteelement 48 und dem Modulboden 16 geklemmt, sodass der Gasgenerator 46 ebenfalls durch die Befestigungsbolzen 30 am Modulboden 16 fixiert ist.

Alternativ sind auch Ausführungsvarianten denkbar, bei denen der Gasgenerator 46 und das Gassackhalteelement 48 einstückig ausgebildet sind.

Die Figur 2 zeigt das Gassackmodul 14 gemäß Figur 1 im Bereich des Diffusors 32, wobei das Gassackhalteelement 48 über den Gasgenerator 46 gestülpt und jeder Befestigungsbolzen 30 des Gassackhalteelements 48 bereits in zwei Diffusorbefestigungsöffnungen 40 sowie in zwei Öffnungen 50 der beiden zusätzlichen Verstärkungslagen 52 eingefädelt ist.

Diese Diffusorkonstruktion in Verbindung mit der Naht 44 ersetzt bereits zwei separate Verstärkungslagen 52. Idealerweise reicht die integrierte Verstärkung bereits aus, sodass auf separate Verstärkungslagen 52 vollständig verzichtet werden kann. Abhängig von den jeweiligen Randbedingungen des Gassackmoduls 14, zum Beispiel dem Volumen des Gassacks 20 oder dem verwendeten Gassackgewebe, können bei einer Aktivierung des Gassackmoduls 14 im Bereich des Gassackmunds 26 jedoch Materialbeanspruchungen auftreten, die noch zusätzliche separate Verstärkungslagen 52 erfordern. Gemäß den Figuren 1 und 2 sind beispielhaft noch zwei zusätzliche, separate Verstärkungslagen 52 vorgesehen.

Die Figur 3 zeigt das in Figur 1 dargestellte Fahrzeuglenkrad 10 während der Entfaltung des Gassacks 20, wobei die Gassackrückwand 24 transparent dargestellt ist, um den innenliegenden Diffusor 32 mit angedeuteter Gasströmung erkennen zu können. In Verbindung mit den Figuren 1, 2, 4 und 5 wird deutlich, dass der Diffusor 32 in diesem Ausführungsbeispiel genau drei Verbindungsarme 36 aufweist, wobei sich zwischen den Verbindungsarmen 36 genau drei Abströmöffnungen 58 für Generatorgas ergeben, wobei die Abströmöffnungen 58 in Umfangsrichtung im Wesentlichen gleichverteilt angeordnet sein können, d.h. in einem Winkel von ca. 120° (siehe Figur 5). Ferner ist der Gassack 20 insbesondere so im Fahrzeuglenkrad 10 montiert, dass eine der Abströmöffnungen 58 in einer Neutralstellung des Fahrzeuglenkrads 10 für Geradeausfahrt im 6-Uhr-Bereich angeordnet ist.

Die Figuren 4 und 5 zeigen eine erste Ausführungsform des flexiblen Diffusors 32 in einem flach ausgebreiteten Zustand bzw. einem an angedeuteten Faltungslinien 59 gefalteten oder zusammengeklappten Einbauzustand. Der Diffusor 32 ist in diesem Fall einstückig ausgebildet und besteht hier insbesondere aus einem einstückigen Gewebelappen.

Im Folgenden wird anhand der Figuren 4 bis 7 ein Verfahren zum Herstellen des Gassacks 20 beschrieben.

Dabei werden in einem Verfahrensschritt a) zunächst die Gassackrückwand 24 mit mehreren Rückwandöffnungen 28 (vgl. Figur 1) und der flexible Diffusor 32 mit mehreren Verbindungsarmen 36 bereitgestellt, wobei die Verbindungsarme 36 an ihren freien Enden 38 Diffusorbefestigungsöffnungen 40 aufweisen (vgl. Figuren 4 und 5).

Anschließend werden in einem Verfahrensschritt b) die Gassackrückwand 24 und die Verbindungsarme 36 relativ zueinander so ausgerichtet, dass eine Rückwandöffnung 28 jeweils mit wenigstens zwei Diffusorbefestigungsöffnungen 40 benachbarter Verbindungsarme 36 fluchtet (vgl. Figur 1).

Die Gassackrückwand 24 wird dann in einem Verfahrensschritt c) mit den Verbindungsarmen 36 des Diffusors 32 durch eine Naht 44 verbunden (vgl. Figur 6).

Wie bereits oben anhand der Figuren 4 und 5 erläutert, ist der flexible Diffusor 32 in diesem Ausführungsbeispiel einstückig ausgebildet und weist genau drei Verbindungsarme 36 auf, wobei im Schritt c) alle Verbindungsarme 36 mit der Gassackrückwand 24 verbunden werden.

Wie in dem vergrößerten Ausschnitt der Figur 6 gut zu erkennen, sind die Verbindungsarme 36 und die Gassackrückwand 24 hier durch eine einzige Naht 44 verbunden, wobei diese Naht 44 den Gassackmund 26 vollständig umschließt. Um die Gassackanbindung weiter zu stärken und insbesondere ein Ausreißen der Rückwandöffnungen 28 und Diffusorbefestigungsöffnungen 40 nach einer Aktivierung des Gassackmoduls 14 zu vermeiden, ist die Naht 44 in diesem Fall so ausgeführt, dass sie zusätzlich auch jede der Rückwandöffnungen 28 (und damit auch jede der fluchtenden Diffusorbefestigungsöffnungen 40) einzeln umschließt.

In einem Verfahrensschritt d) wird schließlich die in Figur 7 transparent dargestellte Gassackfrontwand 22 bereitgestellt und mit der Gassackrückwand 24 verbunden, insbesondere durch eine randseitig umlaufende Umfangsnaht 60.

Die Ausführung des Diffusors 32 gemäß den Figuren 1 bis 7 ist besonders vorteilhaft, weil sich durch geschickte Konstruktion und Anbindung eines einzigen Gewebelappens sowohl eine Diffusorfunktion als auch eine Verstärkung des Gassacks 20 im Bereich des Gassackmunds 26 realisieren lässt, wobei die Verstärkung zumindest zwei herkömmliche, separate Verstärkungslagen ersetzt. Idealerweise erfolgt die Anbindung des Diffusors 32 besonders zeit- und kostensparend durch eine einzige Naht 44.

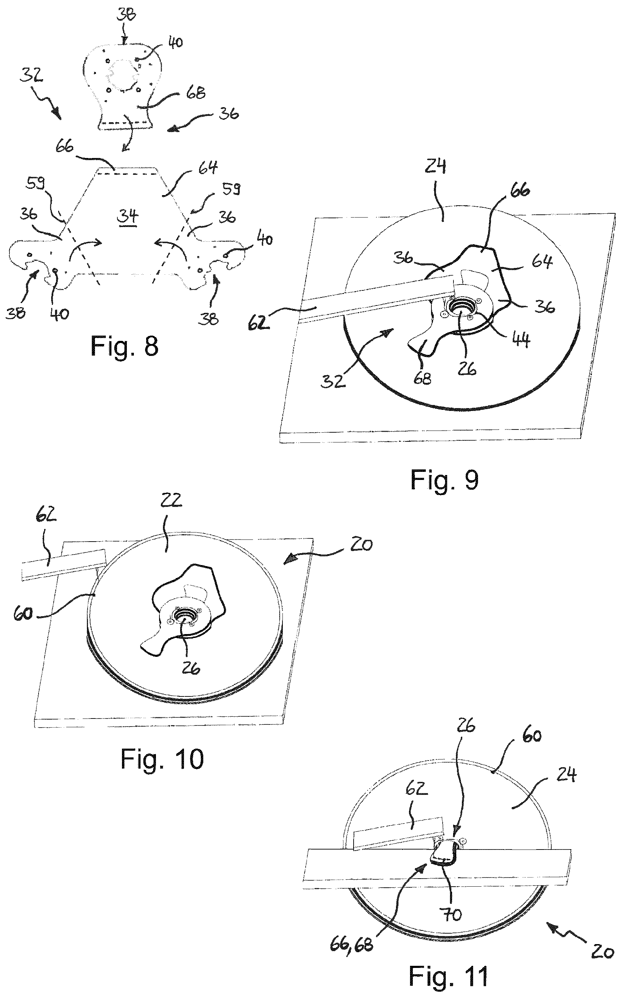

Eine Herausforderung bei dieser Ausgestaltung des Diffusors 32 ist allerdings das Herstellen der Naht 44. Wie in Figur 6 angedeutet, muss die Nähmaschine hierzu einen recht schlanken Näharm 62 aufweisen, der in eine spätere Abströmöffnung 58 zwischen zwei benachbarten Verbindungsarmen 36 des Diffusors 32 eingeführt werden muss. Sollte dies aufgrund der Größe des Diffusors 32 und/oder der Bauart der Nähmaschine nicht möglich sein, wird eine zweite, zweiteilige Ausführungsform des Diffusors 32 gemäß Figur 8 und ein in den Figuren 9 bis 11 angedeutetes Herstellungsverfahren für den Gassack 20 vorgeschlagen.

Konkret ist hierbei ein Verbindungsarm 36 des flexiblen Diffusors 32 zweiteilig ausgebildet, sodass der Diffusor 32 einen Diffusorabschnitt 64 mit zwei Verbindungsarmen 36 und einem Armansatz 66 sowie einen separaten Armabschnitt 68 mit Diffusorbefestigungsöffnungen 40 aufweist, wobei mit Blick auf das oben beschriebene Herstellungsverfahren für den Gassack 20 im Schritt c) sowohl alle Verbindungsarme 36 des Diffusorabschnitts 64 als auch der separate Armabschnitt 68 mit der Gassackrückwand 24 verbunden, insbesondere vernäht werden. Dabei fluchtet in diesem Fall jeweils eine Rückwandöffnung 28 mit einer Diffusorbefestigungsöffnung 40 eines Verbindungsarms 36 des Diffusorabschnitts 64 und einer Diffusorbefestigungsöffnung 40 des separaten Armabschnitts 68 (vgl. Figur 9).

Gemäß Figur 10 wird dann im Schritt d) die transparent dargestellte Gassackfrontwand 22 bereitgestellt und mit der Gassackrückwand 24 verbunden, insbesondere durch eine randseitig umlaufende Umfangsnaht 60.

Nach diesem Schritt d) werden schließlich der Armansatz 66 und der separate Armabschnitt 68 durch den Gassackmund 26 nach außen gezogen und miteinander verbunden, insbesondere durch eine Diffusornaht 70 (vgl. Figur 11).

Alternativ ist jedoch auch eine Verfahrensvariante denkbar, bei welcher der Armansatz 66 und der separate Armabschnitt 68 nach dem Verfahrensschritt c) aber vor dem Verfahrensschritt d) durch die Diffusornaht 70 miteinander verbunden werden.

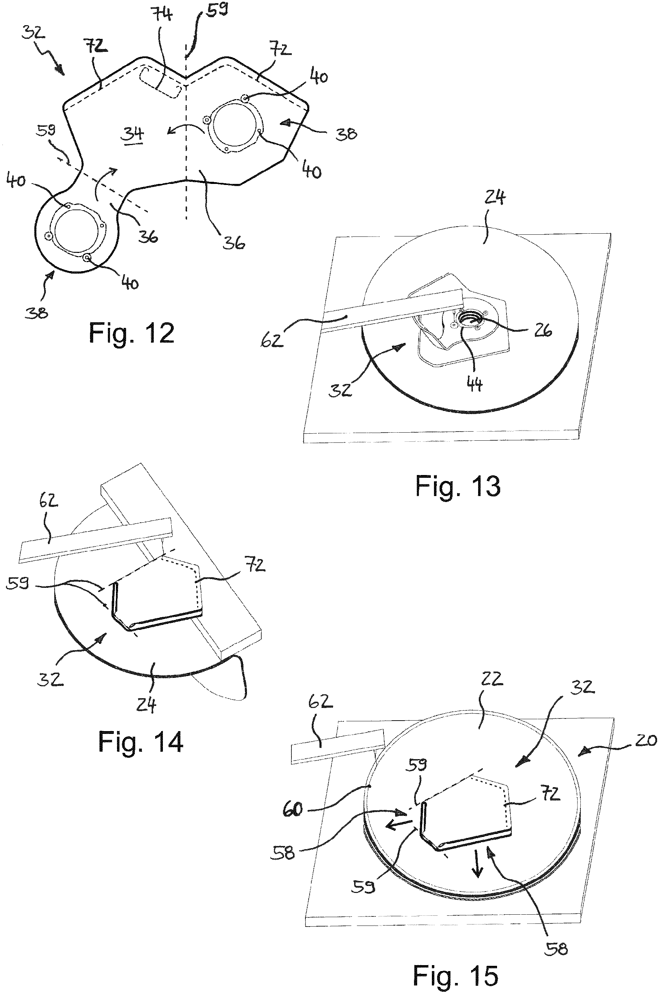

Die Figur 12 zeigt den Diffusor 32 gemäß einer dritten Ausführungsform, bei welcher der Diffusor 32 analog zu den Figuren 4 bis 7 einstückig ausgebildet ist, jedoch nur zwei Verbindungsarme 36 aufweist. Die Herstellung des Gassacks 20 erfolgt ähnlich wie bei den zuvor beschriebenen Ausführungsformen des Diffusors 32. So werden die Gassackrückwand 24 und die Verbindungsarme 36 wiederum zunächst so ausgerichtet, dass eine Rückwandöffnung 28 mit zwei Diffusorbefestigungsöffnungen 40 benachbarter Verbindungsarme 36 fluchtet, bevor im Schritt c) die Gassackrückwand 24 mit den Verbindungsarmen 36 des Diffusors 32 verbunden werden (vgl. Figur 13) und im Schritt d) schließlich die Gassackfrontwand 22 mit der Gassackrückwand 24 verbunden wird (vgl. Figur 15).

Als Besonderheit wird jedoch bei dieser Ausführungsform des Diffusors 32 zwischen Schritt c) und Schritt d) ein randseitiger Abschnitt eines Verbindungsarms 36 mit einem randseitigen Abschnitt des zentralen Abdeckabschnitts 34 durch eine Naht 72 verbunden (vgl. Figur 14).

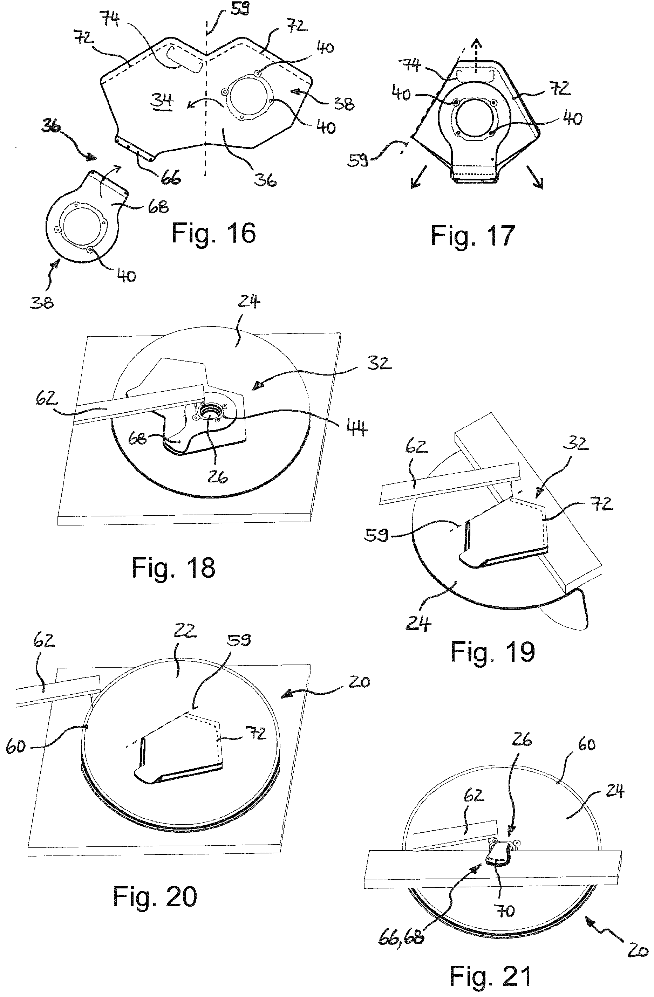

Durch diese Naht 72 lassen sich Größe und/oder Anzahl der Abströmöffnungen 58 des Diffusors 32 verringern. Im dargestellten Ausführungsbeispiel gemäß den Figuren 12 bis 15 weist der Diffusor 32 zwei Abströmöffnungen 58 für Generatorgas auf, die in Figur 15 durch zwei Pfeile angedeutet sind. Der Gassack 20 ist in diesem Fall insbesondere so im Fahrzeuglenkrad 10 montiert, dass die Abströmöffnungen 58 in einer Neutralstellung des Fahrzeuglenkrads 10 für Geradeausfahrt etwa im 5-Uhr-Bereich und im 7-Uhr-Bereich angeordnet sind (vgl. auch Figur 17).

Wie in Figur 12 dargestellt, weist der zentrale Abdeckabschnitt 34 des Diffusors 32 in dieser Ausführungsform randseitig eine definierte Schwächungszone 74 auf, an welcher der zentrale Abdeckabschnitt 34 bei Erreichen einer vorgegebenen Materialbeanspruchung aufreißt. Diese Schwächungszone 74 ist beispielsweise eine lineare Gewebeperforation des Diffusors 32, welche nach der Aktivierung des Gassackmoduls 14 bei Erreichen eines vorgegebenen Gasdrucks aufreißt und eine weitere Abströmöffnung 58 freigibt. Im dargestellten Ausführungsbeispiel ist die Schwächungszone 74 so angeordnet, dass die weitere Abströmöffnung 58 für Generatorgas in einer Neutralstellung des Fahrzeuglenkrads 10 für Geradeausfahrt etwa im 12-Uhr-Bereich entsteht (vgl. auch Figur 17, gestrichelter Pfeil). Auf diese Weise lässt sich nach der Aktivierung des Gassackmoduls 14 beispielsweise eine etwas verzögerte Gassackentfaltung im 12-Uhr-Bereich realisieren.

Da die Naht 72 erst nach einer Verbindung der Gassackrückwand 24 mit den Verbindungsarmen 36 hergestellt wird, ist die Naht 44 in dieser Ausführungsform des Diffusors 32 für den Näharm 62 besser zugänglich und somit einfacher herzustellen als bei der ersten Ausführungsform gemäß den Figuren 4 bis 7. Trotzdem ist natürlich auch bei einer Diffusorausführung 32 gemäß Figur 12 eine zweiteilige Konstruktion denkbar, wie in Figur 16 dargestellt.

Die Figuren 16 und 17 zeigen eine vierte Ausführungsform des flexiblen Diffusors 32 in einem flach ausgebreiteten Zustand bzw. einem gefalteten oder zusammengeklappten Einbauzustand. Ein entsprechendes Herstellungsverfahren für den Gassack 20 ist in den Figuren 18 bis 21 angedeutet.

Analog zur zweiten Ausführungsform gemäß den Figuren 8 bis 11 ist ein Verbindungsarm 36 des flexiblen Diffusors 32 zweiteilig ausgebildet, sodass der Diffusor 32 einen Diffusorabschnitt 64 mit einem Verbindungsarm 36 und einem Armansatz 66 sowie einen separaten Armabschnitt 68 mit Diffusorbefestigungsöffnungen 40 aufweist, wobei mit Blick auf das oben beschriebene Herstellungsverfahren für den Gassack 20 im Schritt c) sowohl der Verbindungsarm 36 des Diffusorabschnitts 64 als auch der separate Armabschnitt 68 mit der Gassackrückwand 24 verbunden, insbesondere vernäht werden. Dabei fluchtet jeweils eine Rückwandöffnung 28 mit einer Diffusorbefestigungsöffnung 40 des Verbindungsarms 36 des Diffusorabschnitts 64 und einer Diffusorbefestigungsöffnung 40 des separaten Armabschnitts 68 (vgl. Figur 18).

Gemäß Figur 19 wird dann der randseitige Abschnitt des Verbindungsarms 36 mit dem randseitigen Abschnitt des zentralen Abdeckabschnitts 34 verbunden, vorzugsweise durch die Naht 72 vernäht, bevor dann im Schritt d) die Gassackfrontwand 22 bereitgestellt und mit der Gassackrückwand 24 durch eine randseitig umlaufende Umfangsnaht 60 verbunden wird, wie in Figur 20 dargestellt.

Nach diesem Schritt d) werden schließlich der Armansatz 66 und der separate Armabschnitt 68 durch den Gassackmund 26 nach außen gezogen und miteinander verbunden, insbesondere durch die Diffusornaht 70 (vgl. Figur 21).

Alternativ ist jedoch auch hier eine Verfahrensvariante denkbar, bei welcher der Armansatz 66 und der separate Armabschnitt 68 vor dem Verfahrensschritt d) miteinander verbunden werden, insbesondere durch die Diffusornaht 70.

## Patentansprüche

1. Gassack für ein Fahrzeuginsassen-Rückhaltesystem, mit
einer Gassackrückwand (24), die einen Gassackmund (26) zum Aufblasen des Gassacks (20) sowie mehrere um den Gassackmund (26) verteilte Rückwandöffnungen (28) zur Aufnahme von Befestigungsbolzen (30) aufweist, und
einem flexiblen Diffusor (32), der einen zentralen Abdeckabschnitt (34) aufweist, sowie mehrere Verbindungsarme (36), die sich jeweils vom zentralen Abdeckabschnitt (34) zu einem freien Ende (38) erstrecken,
wobei die freien Enden (38) der Verbindungsarme (36) Diffusorbefestigungsöffnungen (40) zur Aufnahme von Befestigungsbolzen (30) aufweisen,
wobei die freien Enden (38) der Verbindungsarme (36) auf einer Innenseite (42) der Gassackrückwand (24) so angeordnet sind, dass die Diffusorbefestigungsöffnungen (40) mit den Rückwandöffnungen (28) fluchten und auf jeder Rückwandöffnung (28) jeweils zwei Diffusorbefestigungsöffnungen (40) von unterschiedlichen, überlappenden Verbindungsarmen (36) zu liegen kommen, und
wobei die im Bereich einer Rückwandöffnung (28) überlappenden Verbindungsarme (36) fest miteinander sowie fest mit der Gassackrückwand (24) verbunden sind,
**dadurch gekennzeichnet, dass** die Verbindungsarme (36) und die Gassackrückwand (24) durch eine einzige Naht (44) verbunden sind, wobei die Naht (44) den Gassackmund (26) vollständig umschließt.

2. Gassack nach Anspruch 1, **dadurch gekennzeichnet, dass** die Naht (44) zusätzlich eine, insbesondere jede, der Rückwandöffnungen (28) einzeln umschließt.

3. Gassack nach einem der vorhergehenden Ansprüche, **dadurch gekennzeichnet, dass** der flexible Diffusor (32) einstückig ausgebildet ist, insbesondere wobei der Diffusor (32) aus einem einstückigen Gewebelappen besteht.

4. Gassack nach einem der vorhergehenden Ansprüche, **dadurch gekennzeichnet, dass** der zentrale Abdeckabschnitt (34) eine definierte Schwächungszone (74) aufweist, an welcher der zentrale Abdeckabschnitt (34) bei Erreichen einer vorgegebenen Materialbeanspruchung aufreißt.

5. Gassackmodul mit einem Gasgenerator (46), einem Gassackhalteelement (48), einem Modulboden (16) sowie einem Gassack (20) nach einem der vorhergehenden Ansprüche, **dadurch gekennzeichnet, dass** Befestigungsbolzen (30) vorgesehen sind, welche sich durch die Rückwandöffnungen (28) und die Diffusorbefestigungsöffnungen (40) erstrecken sowie zumindest das Gassackhalteelement (48) und den Gassack (20) am Modulboden (16) fixieren.

6. Fahrzeuglenkrad mit einem Lenkradgrundkörper (12) und einem Gassackmodul (14) nach Anspruch 5, **dadurch gekennzeichnet, dass** das Gassackmodul (14) am Lenkradgrundkörper (12) befestigt ist, insbesondere mittels einer Rastverbindung.

7. Fahrzeuglenkrad nach Anspruch 6, **dadurch gekennzeichnet, dass** der Diffusor (32) genau drei Verbindungsarme (36) aufweist, wobei sich zwischen den Verbindungsarmen (36) genau drei Abströmöffnungen (58) ergeben.

8. Fahrzeuglenkrad nach Anspruch 7, **dadurch gekennzeichnet, dass** in einer Neutralstellung des Fahrzeuglenkrads (10) für Geradeausfahrt eine der Abströmöffnungen (58) im 6-Uhr-Bereich angeordnet ist.

9. Verfahren zum Herstellen eines Gassacks (20) nach einem der Ansprüche 1 bis 4, **gekennzeichnet durch** folgende Verfahrensschritte:
a) Bereitstellen einer Gassackrückwand (24) mit einem Gassackmund (26) zum Aufblasen des Gassacks (20), mehreren Rückwandöffnungen (28) und einem flexiblen Diffusor (32) mit mehreren Verbindungsarmen (36), welche an ihren freien Enden (38) Diffusorbefestigungsöffnungen (40) aufweisen;
b) Ausrichten der Gassackrückwand (24) und der Verbindungsarme (36), sodass eine Rückwandöffnung (28) mit wenigstens zwei Diffusorbefestigungsöffnungen (40) benachbarter Verbindungsarme (36) fluchtet;
c) Verbinden der Gassackrückwand (24) mit den Verbindungsarmen (36) des Diffusors (32) durch eine Naht (44), die den Gassackmund (26) vollständig umschließt;
d) Bereitstellen einer Gassackfrontwand (22) und Verbinden dieser Gassackfrontwand (22) mit der Gassackrückwand (24), insbesondere durch eine randseitig umlaufende Umfangsnaht (60);

10. Verfahren nach Anspruch 9, **dadurch gekennzeichnet, dass** zwischen Schritt c) und Schritt d) ein randseitiger Abschnitt eines Verbindungsarms (36) mit einem randseitigen Abschnitt des zentralen Abdeckabschnitts (34) verbunden wird, insbesondere durch eine Naht (72) vernäht wird.

11. Verfahren nach Anspruch 9 oder 10, **dadurch gekennzeichnet, dass** der flexible Diffusor (32) einstückig ausgebildet ist und wenigstens zwei Verbindungsarme (36) aufweist, wobei im Schritt c) alle Verbindungsarme (36) mit der Gassackrückwand (24) verbunden werden.

12. Verfahren nach Anspruch 9 oder 10, **dadurch gekennzeichnet, dass** ein Verbindungsarm (36) des flexiblen Diffusors (32) zweiteilig ausgebildet ist, sodass der Diffusor (32) einen Diffusorabschnitt (64) mit wenigstens einem Verbindungsarm (36) und einem Armansatz (66) sowie einen separaten Armabschnitt (68) mit Diffusorbefestigungsöffnungen (40) aufweist, wobei im Schritt c) sowohl alle Verbindungsarme (36) des Diffusorabschnitts (64) als auch der separate Armabschnitt (68) mit der Gassackrückwand (24) verbunden werden.

13. Verfahren nach Anspruch 12, **dadurch gekennzeichnet, dass** der Armansatz (66) und der separate Armabschnitt (68) nach Schritt d) durch den Gassackmund (26) nach außen gezogen und miteinander verbunden werden, insbesondere durch eine Diffusornaht (70).

14. Verfahren nach Anspruch 12, **dadurch gekennzeichnet, dass** der Armansatz (66) und der separate Armabschnitt (68) vor Schritt d) miteinander verbunden werden, insbesondere durch eine Diffusornaht (70).

## Claims

1. An airbag for a vehicle occupant restraint system, comprising
an airbag rear wall (24) which includes an airbag mouth (26) for inflating the airbag (20) as well as plural rear wall openings (28) distributed around the airbag mouth (26) for receiving fastening bolts (30), and
a flexible diffusor (32) which includes a central cover portion (34) as well as plural connecting arms (36) each of which extends from the central cover portion (34) to a free end (38),
wherein the free ends (38) of the connecting arms (36) include diffusor fastening holes (40) for receiving fastening bolts (30),
wherein the free ends (38) of the connecting arms (36) are disposed on an inner face (42) of the airbag rear wall (24) so that the diffusor fastening holes (40) are aligned with the rear wall openings (28) and two respective diffusor fastening holes (40) of different overlapping connecting arms (36) come to lie on each rear wall opening (28), and
wherein the connecting arms (36) overlapping in the area of a rear wall opening (28) are connected firmly to each other and firmly to the airbag rear wall (24),
**characterized in that** the connecting arms (36) and the airbag rear wall (24) are connected by one single seam (44), the seam (44) completely enclosing the airbag mouth (26).

2. The airbag according to claim 1, **characterized in that** the seam (44) individually encloses in addition one, particularly each, of the rear wall openings (28).

3. The airbag according to any one of the preceding claims, **characterized in that** the flexible diffusor (32) is formed in one piece, in particular wherein the diffusor (32) is made of a one-piece fabric cloth.

4. The airbag according to any one of the preceding claims, **characterized in that** the central cover portion (34) has a defined weakened zone (74) where the central cover portion (34) tears when a predetermined material stress is reached.

5. An airbag module comprising a gas generator (46), an airbag retaining element (48), a module bottom (16) and an airbag (20) according to any one of the preceding claims, **characterized in that** fastening bolts (30) are provided which extend through the rear wall openings (28) and the diffusor fastening holes (40) and which fix at least the airbag retaining element (48) and the airbag (20) to the module bottom (16).

6. A vehicle steering wheel comprising a steering wheel body (12) and an airbag module (14) according to claim 5, **characterized in that** the airbag module (14) is fastened on the steering wheel body (12), in particular by means of a detent connection.

7. The vehicle steering wheel according to claim 6, **characterized in that** the diffusor (32) includes exactly three connecting arms (36), wherein exactly three discharge holes (58) are formed between the connecting arms (36).

8. The vehicle steering wheel according to claim 7, **characterized in that**, in a neutral position of the vehicle steering wheel (10) for straight-ahead driving, one of the discharge holes (58) is arranged in the 6 o'clock area.

9. A method for manufacturing an airbag (20) according to any one of the claims 1 to 4, **characterized by** the following method steps:
a) providing an airbag rear wall (24) having an airbag mouth (26) for inflating the airbag (20), plural rear wall openings (28) and a flexible diffusor (32) having plural connecting arms (36) which include diffusor fastening holes (40) at their free ends (38);
b) orienting the airbag rear wall (24) and the connecting arms (36) so that a rear wall opening (28) is aligned with at least two diffusor fastening holes (40) of adjacent connecting arms (36);
c) connecting the airbag rear wall (24) to the connecting arms (36) of the diffusor (32) by a seam (44) which completely encloses the airbag mouth (26);
d) providing an airbag front wall (22) and connecting said airbag front wall (22) to the airbag rear wall (24), in particular by a circumferential seam (60) around the edge.

10. The method according to claim 9, **characterized in that**, between step c) and step d), an edge-side portion of a connecting arm (36) is connected, specifically sewn by a seam (72), to an edge-side portion of the central cover portion (34).

11. The method according to claim 9 or 10, **characterized in that** the flexible diffusor (32) is formed in one piece and has at least two connecting arms (36), wherein, in step c), all connecting arms (36) are connected to the airbag rear wall (24).

12. The method according to claim 9 or 10, **characterized in that** a connecting arm (36) of the flexible diffusor (32) is configured in two parts so that the diffusor (32) includes a diffusor portion (64) having at least one connecting arm (36) and an arm projection (66) as well as a separate arm portion (68) having diffusor fastening holes (40), wherein, in step c), all connecting arms (36) of the diffusor portion (64) as well as the separate arm portion (68) are connected to the airbag rear wall (24).

13. The method according to claim 12, **characterized in that**, after step d), the arm projection (66) and the separate arm portion (68) are pulled outward through the airbag mouth (26) and are connected to each other, in particular by a diffusor seam (70).

14. The method according to claim 12, **characterized in that**, prior to step d), the arm projection (66) and the separate arm portion (68) are connected to each other, in particular by a diffusor seam (70).

## Revendications

1. Sac gonflable pour un système de retenue pour occupants de véhicule, avec une paroi arrière du sac gonflable (24), qui comporte une ouverture du sac gonflable (26) pour le gonflage du sac gonflable (20) ainsi que plusieurs ouvertures de la paroi arrière (28) réparties autour de l'ouverture du sac gonflable (26) pour recevoir des boulons de fixation (30), et un diffuseur flexible (32), qui comporte une section de couverture centrale (34), ainsi que plusieurs bras de connexion (36), s'étendant chacun de la section de couverture centrale (34) jusqu'à une extrémité libre (38).
pour lequel les extrémités libres (38) des bras de connexion (36) présentent des ouvertures de fixation du diffuseur (40) destinées à recevoir des boulons de fixation (30),
pour lequel les extrémités libres (38) des bras de connexion (36) sont disposées sur une face intérieure (42) de la paroi arrière du sac gonflable (24) de sorte que les ouvertures de fixation du diffuseur (40) s'alignent avec les ouvertures de la paroi arrière (28) et qu'à chaque ouverture de la paroi arrière (28) se trouvent respectivement deux ouvertures de fixation du diffuseur (40) provenant de bras de connexion (36) différents et superposés, et
pour lequel les bras de connexion (36) se chevauchant dans la zone d'une ouverture arrière (28) sont solidement reliés entre eux ainsi qu'à la paroi arrière du sac gonflable (24), **caractérisé en ce que** les bras de connexion (36) et la paroi arrière du sac gonflable (24) sont reliés par une seule couture (44), pour lequel la couture (44) entoure complètement l'ouverture du sac gonflable (26).

2. Sac gonflable selon la revendication 1, **caractérisé en ce que** la couture (44) entoure en outre une, en particulier chacune, des ouvertures arrière (28) individuellement.

3. Sac gonflable selon l'une des revendications précédentes, **caractérisé en ce que** le diffuseur flexible (32) est formé en une seule pièce, en particulier pour lequel le diffuseur (32) consiste en un pan de tissu monobloc.

4. Sac gonflable selon l'une quelconque des revendications précédentes, **caractérisé en ce que** la section de couverture centrale (34) comporte une zone d'affaiblissement définie (74), au niveau de laquelle la section de couverture centrale (34) se déchire lorsqu'une sollicitation de la matière prédéterminée est atteinte.

5. Module airbag avec un générateur de gaz (46), un élément de maintien du sac gonflable (48), un fond de module (16) ainsi qu'un sac gonflable (20) selon l'une des revendications précédentes, **caractérisé en ce que** des boulons de fixation (30) sont prévus, lesquels s'étendent à travers les ouvertures du panneau arrière (28) et les ouvertures de fixation du diffuseur (40) et fixent au moins l'élément de maintien du sac gonflable (48) et le sac gonflable (20) au fond du module (16).

6. Volant de véhicule avec un corps de base de volant (12) et un module airbag (14) selon la revendication 5, **caractérisé en ce que** le module airbag (14) est fixé au corps de base du volant (12), en particulier au moyen d'une connexion à ergots.

7. Volant de véhicule selon la revendication 6, **caractérisé en ce que** le diffuseur (32) comprend exactement trois bras de liaison (36), pour lequel se forment exactement trois orifices d'écoulement (58) entre les bras de liaison (36).

8. Volant de véhicule selon la revendication 7, **caractérisé en ce que**, dans une position neutre du volant de véhicule (10) pour la conduite en ligne droite, une des ouvertures d'évacuation (58) est disposée dans la zone de 6 heures.

9. Procédé de fabrication d'un sac gonflable (20) selon l'une des revendications 1 à 4, **caractérisé par** les étapes de procédé suivantes :
a) Fournir une paroi arrière de sac gonflable (24) avec une ouverture de sac gonflable (26) pour le gonflage du sac gonflable (20), plusieurs ouvertures de paroi arrière (28) et un diffuseur flexible (32) avec plusieurs bras de connexion (36), lesquels présentent à leurs extrémités libres (38) des ouvertures de fixation du diffuseur (40)
b) Aligner la paroi arrière du sac gonflable (24) et les bras de connexion (36), de manière à ce qu'une ouverture de la paroi arrière (28) coïncide avec au moins deux ouvertures de fixation du diffuseur (40) des bras de connexion adjacents (36);
c) Relier le panneau arrière du sac gonflable (24) aux bras de connexion (36) du diffuseur (32) par une couture (44) qui entoure complètement l'ouverture du sac gonflable (26);
d) Fournir une paroi avant de sac gonflable (22) et connecter cette paroi avant de sac gonflable (22) avec la paroi arrière de sac gonflable (24), en particulier par une soudure périphérique continue en bordure (60);

10. Procédé selon la revendication 9, **caractérisé en ce que**, entre l'étape c) et l'étape d), une section latérale d'un bras de liaison (36) est reliée à une section latérale de la section centrale de couverture (34), notamment par une couture (72).

11. Procédé selon la revendication 9 ou 10, **caractérisé en ce que** le diffuseur flexible (32) est formé en une seule pièce et comporte au moins deux bras de liaison (36), pour lequel tous les bras de liaison (36) sont reliés au fond du sac gonflable (24) lors de l'étape c).

12. Procédé selon la revendication 9 ou 10, **caractérisé en ce qu'**un bras de liaison (36) du diffuseur flexible (32) est formé en deux parties, de sorte que le diffuseur (32) comprend une section de diffuseur (64) avec au moins un bras de liaison (36) et une embase de bras (66) ainsi qu'une section de bras séparée (68) comportant des ouvertures de fixation du diffuseur (40), pour lequel dans l'étape c), autant tous les bras de liaison (36) de la section de diffuseur (64) ainsi que la section de bras séparée (68) sont connectés à la paroi arrière du sac gonflable (24).

13. Procédé selon la revendication 12, **caractérisé en ce que** l'élément de bras (66) et le segment de bras séparé (68) sont, après l'étape d), tirés vers l'extérieur par l'embout du sac gonflable (26) et reliés entre eux, en particulier par une couture de diffuseur (70).

14. Procédé selon la revendication 12, **caractérisé en ce que** l'assemblage du bras (66) et le segment de bras distinct (68) sont reliés l'un à l'autre avant l'étape d), en particulier par une couture de diffuseur (70).
